# FASCICULE DE BREVET EUROPEEN

(11) **EP 2 429 798 B1**
(45) Date de publication et mention de la délivrance du brevet: **01.05.2013**
(21) Numéro de dépôt: 10728729.4
(22) Date de dépôt: 10.05.2010
(51) Int. Cl.: B29C 51/16

(54) **PROCEDE ET DISPOSITIF DE THERMOFORMAGE ET DE DECOR DE RECIPIENTS**
VERFAHREN UND VORRICHTUNG ZUM WARMFOMEN UND VERZIEREN VON BEHÄLTERN
METHOD AND DEVICE FOR THERMOFORMING AND DECORATING CONTAINERS

(30) Priorité: 13.05.2009 FR 0953152
(43) Date de publication de la demande: 21.03.2012
(73) Titulaire: ERCA, 91940 Les Ulis (FR)
(72) Inventeur: SCHWAB, Dominique, F-78000 Versailles (FR)
(74) Mandataire: Intès, Didier Gérard André
(86) Numéro de dépôt international: PCT/FR2010/050896
(87) Numéro de publication internationale: WO 2010/130933

(56) Documents cités:
- EP-A2- 0 249 363
- WO-A1-2007/091290
- FR-A- 1 602 216
- FR-A1- 2 858 263
- FR-A1- 2 877 604
- US-A1- 2004 026 438

## Description

La présente invention concerne un procédé de fabrication de récipients par thermoformage et de mise en place de décors sur ces récipients, dans lequel on fournit au moins un premier bloc de moule qui comporte au moins une chambre de thermoformage, on introduit un décor dans ladite chambre de thermoformage et on thermoforme un récipient dans cette chambre contenant le décor, à partir d'une ouverture de thermoformage de cette chambre.

Des procédés de ce type sont connus par l'art antérieur, par exemple par les documents FR 2 839 465 et FR 2 877 604.

Dans certains cas, on introduit le décor, en particulier une banderole de décor, par le fond de la chambre de thermoformage et on thermoforme le récipient dans la chambre contenant cette banderole. Dans d'autres cas, on introduit le décor par l'ouverture de thermoformage de la chambre.

Le document FR 2 858 263 divulgue également un procédé de ce type, dans lequel la position du décor est ajustée dans la chambre de thermoformage, avant le thermoformage. Cet ajustement est opéré par une mise en contact du bord inférieur de la banderole avec le fond de la chambre qui, à cet effet, est déplacé vers l'ouverture de la chambre.

Ces procédés donnent globalement satisfaction, mais ils comportent le risque que le décor ne soit pas correctement positionné pendant le thermoformage du récipient.

Lorsque le récipient est en polystyrène, on peut utiliser un décor en polyester ou en polypropylène, de préférence en polypropylène orienté et, pour solidariser entre eux le décor et la paroi du récipient, la face intérieure du décor est enduite d'un matériau de collage à chaud ou « hotmelt ». Ce matériau de collage à chaud a une température de fusion telle que, en général, il reste visqueux jusqu'à la fin du thermoformage, étant rappelé que le matériau du récipient est lui-même thermoformé à chaud. En particulier, la température de fusion du matériau de collage à chaud est de l'ordre de 60°C. Du fait que ce matériau reste visqueux jusqu'à la fin du thermoformage, la face intérieure du décor et la paroi du récipient en cours de thermoformage peuvent glisser l'un par rapport à l'autre jusqu'à ce que le décor et la paroi du récipient soient tous deux plaqués contre la paroi de la chambre de thermoformage à la fin du thermoformage qui se termine en général par une étape de soufflage. Dans ce cas, le thermoformage ne gène pas le positionnement correct du décor.

Toutefois, dans certains cas, on utilise, pour le matériau du décor et pour celui du récipient, des matériaux compatibles solidarisés par une soudure directe rendue possible par la haute température à laquelle est portée la paroi du récipient lors du thermoformage. Par exemple, le récipient peut être en polypropylène, et le décor peut également être en polypropylène, orienté et expansé. Le choix de tels matériaux compatibles est intéressant dans la mesure où il permet au décor d'accompagner le rétreint de la paroi du récipient qui se produit lors du refroidissement de cette paroi et de parfaitement coller à ce récipient après stabilisation de la forme de ce dernier. Toutefois, lorsque des matériaux compatibles sont utilisés, ils ont tendance à se solidariser entre eux dès leur premier contact, même s'ils sont alors à température élevée.

Il en résulte que dès que le matériau formant la paroi du récipient vient au contact du décor positionné dans la chambre de thermoformage, le décor adhère à cette paroi. Si cette venue en contact est réalisée avant la fin du thermoformage, le décor subit alors, comme la paroi du récipient, une phase d'étirage et de soufflage. Il en résulte que, d'une part, le décor peut présenter des déformations locales disgracieuses, nuisant à l'esthétique de l'imagerie qu'il présente ou à la lisibilité des caractères qu'il comporte, ou peut également présenter des tassements formant des plis disgracieux.

L'invention a donc pour but de proposer un procédé de fabrication de récipient par thermoformage qui, avant le thermoformage, place parfaitement le décor dans la chambre de thermoformage en le maintenant au contact de la paroi de cette chambre pour éviter tout contact intempestif entre le matériau du récipient en cours de thermoformage et le décor, avant la fin du thermoformage.

Ce but est atteint grâce au fait que, avant de thermoformer le récipient, on ajuste la position du décor dans la chambre et on charge le décor en électricité statique pour maintenir le décor plaqué contre la paroi de la chambre et au fait que, pour ajuster la position du décor dans la chambre, on repousse le décor vers le fond de la chambre à partir de l'ouverture de thermoformage de cette dernière.

On comprend que, grâce à l'invention, la position du décor est parfaitement ajustée avant le début du thermoformage et que, de plus, ce décor est parfaitement plaqué contre la paroi de la chambre de thermoformage, indépendamment de la pression qui règne dans cette chambre. En conséquence, le matériau en cours de thermoformage pour former le récipient subit son étirage de thermoformage sans risquer de venir au contact du décor. Ce n'est qu'à la phase finale du thermoformage, c'est-à-dire à la fin du processus de soufflage qui plaque le matériau du récipient contre la paroi de la chambre que le contact entre ce matériau et celui du décor s'opère, à un stade où le risque mentionné précédemment n'existe plus.

Le fait de plaquer le décor contre la paroi de la chambre de thermoformage par électricité statique est particulièrement intéressant. En effet, si l'on tentait de réaliser un tel plaquage par aspiration d'air, il faudrait, pour que toute la surface du décor soit plaquée, utiliser un nombre très important d'orifices d'aspiration, très régulièrement répartis dans la paroi de la chambre. Il en résulterait un coût d'usinage du bloc de moule qui serait très important. De plus, pour obtenir une aspiration efficace sur la totalité des orifices concernés, l'unité d'aspiration d'air devrait être conçue de manière complexe et être assez puissante.

Avec invention, l'ouverture de la chambre de thermoformage sert non seulement à thermoformer le récipient, mais également à ajuster la position du décor. De plus, l'ajustement de la position de la banderole peut ainsi être réalisé de manière très précise.

Ces problèmes ne se présentent pas avec un plaquage par électricité statique, particulièrement simple et peu coûteux à mettre en oeuvre, alors qu'il concerne aisément toute la surface du décor.

Avantageusement, on charge le décor en électricité statique en alimentant en électricité une électrode engagée dans la chambre à la fin de l'ajustement de la position du décor.

Ainsi, l'ajustement est réalisé avant que le décor ne soit plaqué contre la paroi de la chambre, et c'est d'une manière extrêmement simple que l'on charge ce décor en électricité statique.

Avantageusement, avant de thermoformer le récipient, on place le premier bloc de moule dans une position d'ajustement, on ajuste la position du décor et on charge le décor en électricité statique alors que le premier bloc de moule est dans cette position d'ajustement, et on amène le premier bloc de moule dans une position de travail, et on thermoforme un récipient dans la chambre alors que le premier bloc de moule est dans cette position de travail.

Le fait de réaliser l'étape d'ajustement et de chargement en électricité statique du décor alors que le premier bloc de moule est dans sa position d'ajustement permet d'utiliser pour ce faire des outils dont la manoeuvre n'est pas gênée par la présence des outils de thermoformage, eux-mêmes opérationnels en position de travail.

Avantageusement, on fournit un deuxième bloc de moule analogue au premier bloc de moule, et on fait en sorte que, lorsque l'un des blocs est dans la position de travail, l'autre bloc soit dans la position d'ajustement.

Dans ce cas, l'étape d'ajustement et l'étape de thermoformage s'opèrent respectivement dans chacun des deux blocs de moule, en temps masqué.

Avantageusement, avant de placer le premier bloc de moule dans la position d'ajustement, on place ce bloc de moule dans une position d'introduction et on introduit un décor dans la chambre de thermoformage alors que le premier bloc de moule est dans sa position d'introduction.

Classiquement, les outils permettant l'introduction d'un décor dans la chambre de thermoformage sont assez volumineux puisque, lorsque ces décors sont formés par des banderoles, ces outils comportent des moyens d'amenée de bandelettes de décor, de découpe et d'enroulement de ces bandelettes, et des moyens pour repousser ces bandelettes dans la chambre de thermoformage. En variante, ces outils peuvent comporter des moyens pour dépiler des étiquettes, et pour repousser ces étiquettes dans la chambre de thermoformage. En tout état de cause, ces outils sont relativement volumineux et il est donc avantageux que l'étape d'introduction se produise dans une position du premier bloc de moule qui soit différente de sa position d'ajustement, ce qui permet de faire en sorte que la manoeuvre des outils d'introduction des décors ne soit pas gênée par celle des outils d'ajustement des décors, et réciproquement.

Avantageusement, on fournit un troisième bloc de moule analogue aux premier et deuxième blocs de moule et on fait en sorte que, lorsque l'un des blocs de moule est dans la position de travail, un autre bloc soit dans la position d'ajustement et encore un autre bloc soit dans la position d'introduction.

On réalise ainsi les étapes d'introduction d'un décor, d'ajustement d'un autre décor, et de thermoformage d'un récipient dans une chambre comprenant encore un autre décor, en temps masqué.

Avantageusement, on déplace le premier bloc de moule entre sa position de travail, sa position d'ajustement et, le cas échéant, sa position d'introduction, en faisant pivoter ledit bloc autour d'un axe de basculement.

Un tel mouvement de pivotement présente l'intérêt d'avoir une cinématique extrêmement simple et de ne nécessiter qu'un faible encombrement, en mettant à profit les dégagements qui se trouvent de part et d'autre des blocs de moule.

L'invention concerne également un dispositif pour fabriquer des récipients par thermoformage et mettre en place des décors sur ces récipients, le dispositif comprenant au moins un premier bloc de moule qui comporte au moins une chambre de thermoformage ayant une ouverture de thermoformage, des moyens pour introduire un décor dans la chambre de thermoformage et des moyens pour thermoformer un récipient dans cette chambre, à partir de l'ouverture de thermoformage.

Comme indiqué précédemment, on connaît des procédés et des dispositifs pour fabriquer par thermoformage des récipients comprenant un décor. Ces dispositifs permettent de mettre en place un décor dans la chambre de thermoformage, soit par l'ouverture de thermoformage, soit par le fond de la chambre. Avec les outils classiques, le décor est positionné dans la chambre de thermoformage sans que sa position ne soit parfaitement ajustée au cours du thermoformage. Il existe donc, lors du thermoformage, un risque de contact entre le décor et le matériau en cours de thermoformage. Comme indiqué précédemment, si le décor et le matériau du récipient sont des matériaux compatibles, à adhérence immédiate, ceci implique un risque de déformation malvenue du décor. Le document FR 2 858 263 divulgue un dispositif du type précité, comportant en outre des moyens pour, avant le thermoformage, ajuster la position du décor dans la chambre de thermoformage. Le risque de contact évoqué ci-dessus subsiste toutefois si la banderole n'est pas parfaitement plaquée contre la paroi de la chambre de thermoformage. De plus, l'ajustement opéré par un déplacement du fond de la chambre de thermoformage comme dans FR 2 858 263 est relativement imprécis.

L'invention vise donc à surmonter ces difficultés.

Ce but est atteint grâce au fait que le dispositif de l'invention comprend des moyens pour, avant le thermoformage, charger le décor en électricité statique pour maintenir le décor contre la paroi de la chambre et au fait que les moyens pour ajuster la position du décor dans la chambre comprennent des doigts d'ajustement ayant chacun une tête de déflection et un épaulement, et aptes à être engagés dans la chambre, de préférence par l'ouverture de thermoformage.

L'invention permet donc, par des moyens simples, d'ajuster la position du décor dans la chambre et de parfaitement plaquer ce décor contre la paroi de la chambre, pour éviter un contact intempestif entre ce décor et le matériau en cours de thermoformage.

Avantageusement, les moyens pour charger le décor en électricité statique comprennent une électrode, apte à être engagée dans la chambre, de préférence par l'ouverture de thermoformage, et à être alimentée en électricité.

Le choix d'une électrode, engagée dans la chambre de thermoformage, pour charger le décor en électricité statique est judicieux, du fait du faible coût et de la simplicité d'utilisation de tels moyens. Pour engager l'électrode dans la chambre de thermoformage, on utilise de préférence l'ouverture de thermoformage, par laquelle l'intérieur de la chambre de thermoformage est aisément accessible.

Les moyens d'ajustement sont des moyens simples, mobiles en va-et-vient pour être engagés dans la chambre de manière à ajuster le décor en position. Ces doigts d'ajustement mobiles permettent de réaliser un ajustement très précis de la position de la banderole. Cette fois encore, on utilise de préférence l'ouverture de thermoformage pour engager les doigts dans la chambre, car cette ouverture donne un accès complet à l'intérieur de la chambre de thermoformage.

Avantageusement, le dispositif selon l'invention comporte des moyens pour déplacer le premier bloc de moule entre une position d'ajustement, dans laquelle un décor peut être ajusté en position dans la chambre de thermoformage et une position de travail dans laquelle un récipient peut être thermoformé dans ladite chambre.

Comme indiqué précédemment, grâce à cette disposition, les outils qui permettent l'ajustement du décor dans la chambre de thermoformage et ceux qui permettent le thermoformage peuvent être ainsi manoeuvrés sans gêne, les uns par rapport aux autres.

Avantageusement, le dispositif comporte un deuxième bloc de moule analogue au premier bloc de moule et des moyens pour déplacer simultanément les blocs de moule entre leurs positions d'ajustement et de travail de telle sorte que, lorsque l'un des blocs est en position d'ajustement, l'autre bloc est en position de travail.

Il s'agit donc d'un travail en temps masqué.

Avantageusement, les moyens pour déplacer le premier bloc de moule sont aptes à placer en outre ledit premier bloc dans une position d'introduction, dans laquelle un décor peut être introduit dans la chambre de thermoformage.

On peut donc opérer l'introduction d'un décor, à l'aide de moyens d'introduction qui sont en général assez volumineux, sans gêne par rapport à la manoeuvre des moyens d'ajustement, lesquels sont utilisés lorsque le premier bloc de moule est dans sa position d'ajustement.

Avantageusement, le dispositif comporte en outre un troisième bloc de moule analogue aux premier et deuxième blocs de moule et des moyens pour déplacer simultanément les blocs de moule entre leurs positions d'introduction, d'ajustement et de travail de telle sorte que, lorsque l'un des blocs est en position d'introduction, un autre bloc est en position d'ajustement et encore un autre bloc est en position de travail.

Il s'agit là encore d'un travail en temps masqué.

De préférence, les blocs de moule sont solidaires d'un bloc-support commun, apte à être basculé par pivotement autour d'un axe de basculement pour faire passer les blocs entre la position de travail, d'ajustement et, éventuellement, d'introduction.

Le choix de rendre les blocs de moule solidaires d'un même bloc support commun favorise l'ergonomie de l'installation et la manoeuvre des blocs de moule. Il est particulièrement avantageux d'utiliser quatre blocs de moule dont les différentes positions successives sont orientées à 90° les unes par rapport aux autres. En effet, on réalise en général le thermoformage alors que l'axe de la chambre de thermoformage est orienté verticalement. Dans ces conditions, il est aisé de placer les outils d'introduction de décor et les outils d'ajustement du décor latéralement, de part et d'autre du bloc de moule, auquel cas le déplacement des outils d'ajustement et d'introduction s'opère par les mouvements de va-et-vient horizontaux, faciles à maîtriser et ne nécessitant pas de dégagement vertical.

Il est encore avantageux que le dispositif comporte en outre un quatrième bloc de moule analogue aux premier, deuxième et troisième blocs de moule, les quatre blocs de moule étant inclinés à angle droit deux à deux, que lorsqu'un bloc de moule est en position de travail, un autre en position d'introduction et un autre en position d'ajustement, le dernier bloc de moule soit dans une position d'attente et que, pour faire passer les blocs de moule de l'une à l'autre de ces positions, le bloc-support soit pivoté de 90°, de telle sorte que, en position de travail ou d'attente d'un bloc de moule, sa chambre de thermoformage soit orientée verticalement, tandis que, dans les positions d'introduction ou d'ajustement d'un bloc de moule, sa chambre de thermoformage soit orientée horizontalement.

L'invention sera bien comprise et ses avantages apparaîtront mieux, à la lecture de la description détaillée qui suit, d'un mode de réalisation représenté à titre d'exemple non limitatif. La description se réfère aux dessins annexés sur lesquels :
- la figure 1 est une vue schématique illustrant, en vue de côté, une installation comprenant un dispositif selon l'invention, et permettant de mettre en oeuvre le procédé de l'invention ;
- les figures 2A et 2B sont des vues de côté, illustrant deux positions d'un bloc-support commun selon l'invention, comprenant quatre blocs de moule et permettant de mettre en oeuvre le procédé de l'invention ;
- la figure 3 est un agrandissement de la partie III de la figure 2A ; et
- la figure 4 illustre des moyens permettant d'ajuster la position des décors dans les chambres de thermoformage et de charger les décors en électricité statique, selon l'invention.

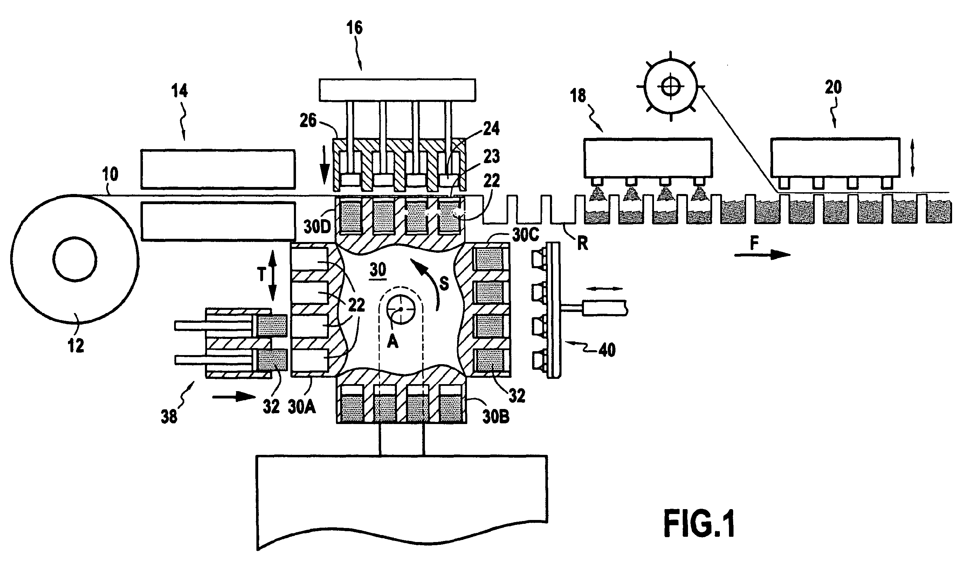

L'installation représentée sur la figure 1 comprend des moyens pour avancer une bande de matériau thermoplastique 10 en pas à pas entre les différents postes de l'installation. Cette bande est par exemple déroulée à partir d'un rouleau 12, et les moyens d'avancement en pas à pas sont connus en eux-mêmes et ne sont donc pas représentés. L'installation comporte, successivement disposés dans le sens F d'avancement de la bande de matériau thermoplastique, un poste de chauffage 14 portant le matériau de la bande à la température de déformation thermoplastique, un poste 16 de thermoformage de récipients R, un poste de remplissage 18 des récipients R avec le produit qu'ils sont destinés à contenir, en particulier un produit liquide ou pâteux du type yogourt, et un poste 20 de mise en place et de scellement d'opercules de fermeture en travers des ouvertures de ces récipients.

De manière connue en soi, le poste de thermoformage comprend une pluralité de chambres de thermoformage 22 ayant chacune une ouverture de thermoformage 23, et une pluralité de pistons de thermoformage 24 disposés mobiles en va-et-vient dans un contre-outil de thermoformage 26.

En l'espèce, le thermoformage est opéré verticalement vers le bas. Ainsi, la bande de matériau thermoplastique est avancée en travers des ouvertures de thermoformage 23 des chambres 22 utilisées à un instant donné pour le thermoformage, puis le contre-outil de thermoformage 26 est avancé vers les chambres de manière à pincer le matériau thermoplastique contre leurs bords, et des pistons de thermoformage 24 sont avancés dans les chambres pour étirer le matériau thermoplastique dans ces chambres. A la fin de la course d'avancement de ces pistons, une étape de soufflage est réalisée à partir des pistons, pour plaquer le matériau thermoplastique contre les parois des chambres de thermoformage. Ensuite, comme indiqué par la double flèche T, les chambres de thermoformage peuvent être déplacées vers le bas pour permettre le démoulage des récipients qui viennent d'être formés et l'avancement de la bande de matériau thermoplastique selon un nouveau pas.

A ce stade, il convient de relever que, bien que l'installation représentée sur la figure 1 réalise le thermoformage de récipients à partir d'une bande de matériau thermoplastique, on pourrait tout aussi bien thermoformer les récipients à partir de jetons ou plaquettes, individuellement ou par groupes.

En l'espèce, l'outil de thermoformage comprend quatre blocs de moule, respectivement désignés par les références 30A, 30B, 30C et 30D. Ces blocs de moule sont solidaires d'un même bloc-support 30 qui, comme on le verra dans la suite, est commandé en pivotement pour placer successivement les différents blocs de moule dans leurs positions utiles. En l'espèce, le quatrième bloc de moule 30D est disposé dans sa position de thermoformage, les chambres 22 étant orientées verticalement en ayant leurs ouvertures de thermoformage 23 ouvertes vers le haut.

Les quatre blocs de moule 30A à 30D sont identiques et présentent chacun le même nombre de chambres de thermoformage. En l'espèce, on a représenté sur la vue de la figure 1 quatre chambres de thermoformage pour chaque bloc de moule, ce qui signifie que les chambres sont organisées en quatre rangées comprenant chacune le même nombre de chambres, par exemple 6 ou 8.

Sur la figure 1, le bloc de moule 30A est dans une position d'introduction, dans laquelle un décor 32 peut être introduit dans la ou les chambres de thermoformage par un poste d'introduction 38. Après cette position d'introduction, par une rotation du bloc-support dans le sens de rotation S indiqué sur la figure 1, le bloc de moule passe successivement par une position d'attente correspondant à celle du bloc 30B, puis par une position d'ajustement qui est celle du bloc 30C, dans laquelle un décor 32 peut être ajusté en position dans la ou chaque chambre de thermoformage et plaqué contre la paroi de la ou chaque chambre ainsi qu'on le décrira dans la suite, et enfin par une position de travail correspondant à celle du bloc 30D, dans laquelle les récipients R peuvent être thermoformés dans les chambres de thermoformage.

On voit que, lorsqu'un bloc de moule est dans cette position de travail correspondant à celle du bloc 30D, ses chambres de thermoformage sont orientées verticalement, comme on l'a précédemment indiqué. En revanche, lorsque le bloc de moule est dans sa position d'introduction 30A ou dans sa position d'ajustement 30C, les chambres de thermoformage 22 sont orientées horizontalement, leurs ouvertures de thermoformage étant respectivement orientées d'un côté (à gauche dans la position d'introduction telle que représentée sur la figure 1) et de l'autre (à droite dans la position d'ajustement telle que représentée sur la figure 1).

Dans la position d'attente 30B, les chambres de thermoformage sont également orientées verticalement, mais leurs ouvertures de thermoformage sont évidemment ouvertes vers le bas, à l'opposé du contre-outil de thermoformage 26. On comprend aisément que c'est par un pivotement du bloc-support commun 30 de 90° autour de l'axe A, que les différents blocs de moule passent successivement de l'une à l'autre de leurs positions. Sur la figure 1, on a représenté schématiquement, en regard du bloc de moule 30C, un poste 40 qui est équipé de moyens pour ajuster la position d'un décor dans chaque chambre de thermoformage et charger ce décor en électricité statique pour le maintenir contre la paroi de la chambre, ainsi qu'on le décrira dans la suite.

Les outils des différents postes de l'installation sont actionnés en synchronisme, en fonction de l'avancement pas à pas de la bande de matériau thermoplastique, en étant par exemple contrôlés par une unité de contrôle électronique.

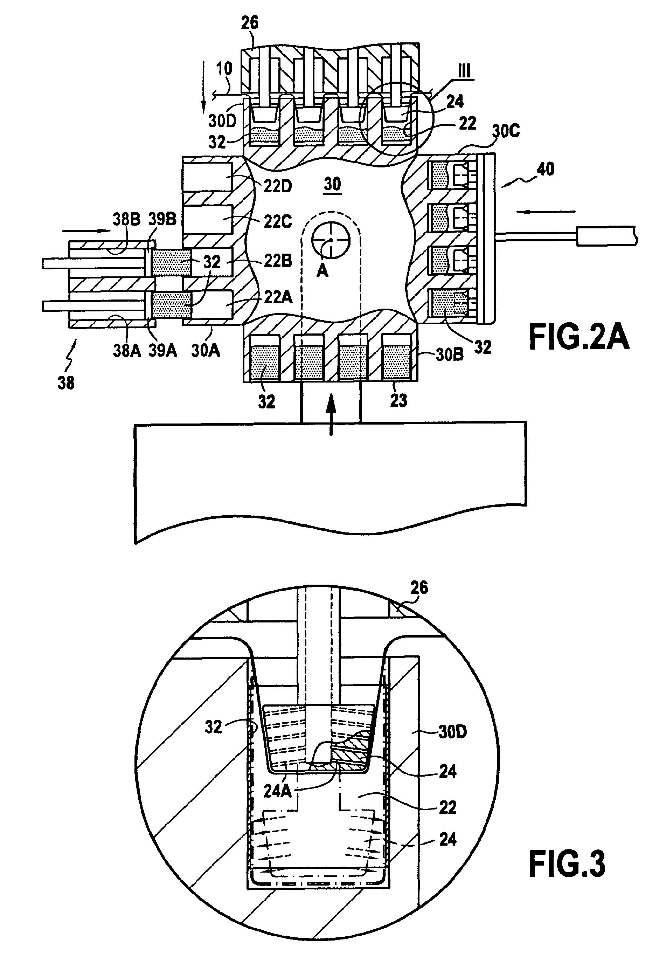

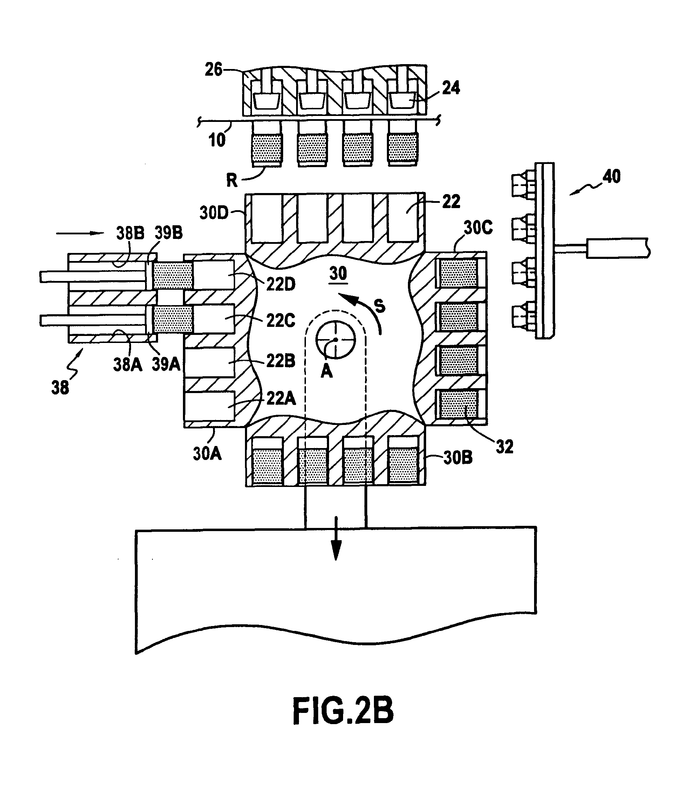

En référence aux figures 2A et 2B, on décrit maintenant plus précisément, selon une variante préférentielle, les différentes positions des blocs de moule et les étapes s'y rapportant.

Dans l'exemple avantageux représenté, les décors sont des banderoles, de sorte qu'on utilisera indifféremment les termes « décors » ou « banderoles » pour les désigner.

Sur la figure 2A, on voit que le bloc de moule 30D est en position de travail, le thermoformage de récipients dans ses chambres de thermoformage 22 étant en cours. En effet, la bande de matériau thermoplastique est pincée entre le contre-moule 26 et le bloc de moule 30D, et l'on voit que les pistons 24 du contre-moule sont en phase de descente dans les chambres de thermoformage, la matière thermoplastique étant en cours d'étirage. Les banderoles de décor 32 ne sont représentées que partiellement, et l'on voit qu'elles sont toutes en position dans les chambres de thermoformage.

Durant cette phase de thermoformage, le bloc-support 30 est dans sa position haute qui permet le thermoformage effectif.

Comme on l'a indiqué précédemment, les moyens d'amenée de décors et d'introduction de ces décors dans les chambres de thermoformage sont généralement assez volumineux. En particulier, lorsque les décors sont réalisés par des banderoles découpées à l'extrémité de bandelettes, ces moyens doivent comporter autant de dispositifs d'amenée et de découpe de bandelettes qu'il y a de chambres de banderolage associées aux chambres de thermoformage.

Sur les figures 2A et 2B, le bloc de moule 30A est dans sa position d'introduction. Toutefois, pour des raisons précitées liées à l'encombrement des moyens d'amenée et d'introduction de décors, cette position comporte deux niveaux respectivement représentés sur la figure 2A et sur la figure 2B. Le niveau haut de la position d'introduction visible sur la figure 2A correspond à la position haute du bloc-support 30. A ce niveau haut, on ne garnit que la moitié des chambres du bloc de moule 30A qui, alors que ce bloc de moule est dans sa position d'introduction, est la moitié inférieure. En l'espèce, chaque bloc de moule comportant quatre rangées de chambres, on ne garnit dans cette position que les chambres des deux rangées inférieures. Pour simplifier la figure, on n'a représenté qu'une partie active des moyens 38 d'introduction de décors dans les chambres de thermoformage, en s'abstenant de représenter les moyens d'amenée et de découpe, ceux-ci étant connus en eux-mêmes. On voit que ces moyens d'introduction 38 comportent deux rangées de chambres de banderolage, respectivement 38A et 38B, dans lesquelles les banderoles peuvent être enroulées, et deux rangées de pistons, respectivement 39A et 39B, qui servent à repousser ces banderoles enroulées dans les chambres de thermoformage des rangées inférieures 22A et 228. Bien entendu, les chambres de banderolage 38A, 38B et les pistons 39A, 39B sont placés en regard des chambres 22A et 22B, leurs axes respectifs étant alignés. Les chambres des rangées supérieures 22C et 22D sont alors quant à elles dégagées.

Ainsi, comme le montre la figure 2A, on met à profit l'étape de thermoformage des récipients pour introduire des décors dans la moitié des rangées de chambres, alors que l'ensemble des blocs de moule est dans sa position haute.

De l'autre côté du bloc-support 30 par rapport au bloc de moule 30A, le bloc de moule 30C est dans sa position d'ajustement. On voit, sur la partie droite de la figure 2A, que les moyens 40 qui permettent d'ajuster les décors en position et de les plaquer contre la paroi des chambres par une charge électrique sont actifs. En effet, les organes d'ajustement et de charge électrique que l'on décrira dans la suite sont engagés dans toutes les chambres de thermoformage du bloc de moule 30C. En comparant la position des décors dans le bloc de moule 30B et dans le bloc de moule 30C, on voit que, dans les blocs de moule 30C, ces banderoles ont été repoussées vers le fond des chambres, dans leurs positions définitives.

Dans l'exemple représenté, chaque bloc de moule passe par sa position d'attente correspondant à celle du bloc 30B entre sa position d'introduction correspondant à celle du bloc 30A et sa position d'ajustement correspondant à celle du bloc 30C. En l'espèce, dans cette position d'attente, les chambres de thermoformage ont leurs ouvertures de thermoformage 23 dirigées vers le bas. Pour éviter que les décors 32 alors présents dans ces chambres n'aient tendance à en ressortir sous l'effet de la gravité, il est possible de réaliser une aspiration d'air dans les parois des chambres pour retenir les décors contre ces parois. Généralement, une telle aspiration n'est pas suffisante en elle-même pour plaquer un décor contre la paroi sur l'intégralité de la surface de ce décor, car elle est opérée par quelques orifices d'aspiration localisés. Pour réaliser un plaquage du décor sur toute sa surface, il faudrait un nombre très important d'orifices parfaitement répartis sur la surface de la paroi de la chambre, et une installation d'aspiration d'air correspondant au nombre de ces orifices. Ceci représenterait un coût élevé.

Bien entendu, d'autres moyens peuvent être utilisés pour retenir les décors dans les chambres de thermoformage alors que le bloc de moule est dans sa position d'attente. Par exemple, lorsque ces décors sont des banderoles, ces dernières peuvent être réalisées dans un matériau qui présente une élasticité telle que ces banderoles ont naturellement tendance à se "dérouler" de telle sorte qu'elles s'appliquent naturellement, bien que de manière imparfaite, contre la paroi cylindrique de chaque chambre de thermoformage.

Sur la figure 2B, le bloc-support 30 est dans sa position basse et l'on voit que les récipients R qui viennent d'être formés dans le bloc de moule 30D sont dégagés des chambres de formage 22 de ce bloc de moule, c'est-à-dire qu'ils sont démoulés. Dans cette situation, ce sont cette fois les chambres des rangées supérieures 22C et 22D du bloc de moule 30A qui se trouvent au regard des moyens d'introduction de décor 38, les axes des chambres de banderolage 38A et 38B et des pistons 39A et 39B étant alors alignés avec ceux des chambres de rangées 22C et 22D.

Des banderoles 32 sont donc en cours d'introduction dans ces chambres 22C et 22D. Les moyens d'ajustement et de charge électrique 40 sont quant à eux inactifs, et l'on voit qu'ils sont écartés du bloc de moule 30C.

L'introduction de banderoles 32 dans les chambres des rangées 22C et 22D est en elle-même très rapide, ces banderoles ayant déjà été découpées et enroulées dans les chambres de banderolage 38A et 38B. A l'issue de cette introduction, toujours alors que le bloc-support 30 est en position basse, on fait tourner ce bloc d'un quart de tour dans le sens de la flèche S, de manière à amener le bloc 30D dans sa position d'introduction, le bloc 30A dans sa position d'attente, le bloc 30B dans sa position d'ajustement et le bloc 30C dans sa position de travail. Une fois ce pivotement effectué, on fait remonter le bloc-support 30 pour revenir à la situation de la figure 2A, en réalisant un thermoformage dans les chambres du bloc de moule 30C.

En se reportant maintenant à la figure 3, on voit que le décor 32 est parfaitement plaqué contre la paroi de la chambre 22. La matière thermoplastique est en cours de déformation, elle est entraînée vers le bas par la tête du piston 24. On a représenté en trait plein la position de ce piston et la déformation correspondante de la matière thermoplastique au début du thermoformage. On voit que, dans cette position, la matière thermoplastique ne vient pas au contact de la banderole 32. On a représenté en trait mixte interrompu la position du piston 24 en fin de thermoformage, alors que la matière a été complètement étirée vers le bas et qu'un soufflage est opéré par les orifices ad-hoc de la tête du piston pour plaquer la matière thermoplastique contre la paroi de la chambre. C'est seulement lors de cette étape de soufflage que la matière thermoplastique vient au contact de la face intérieure de la banderole 32.

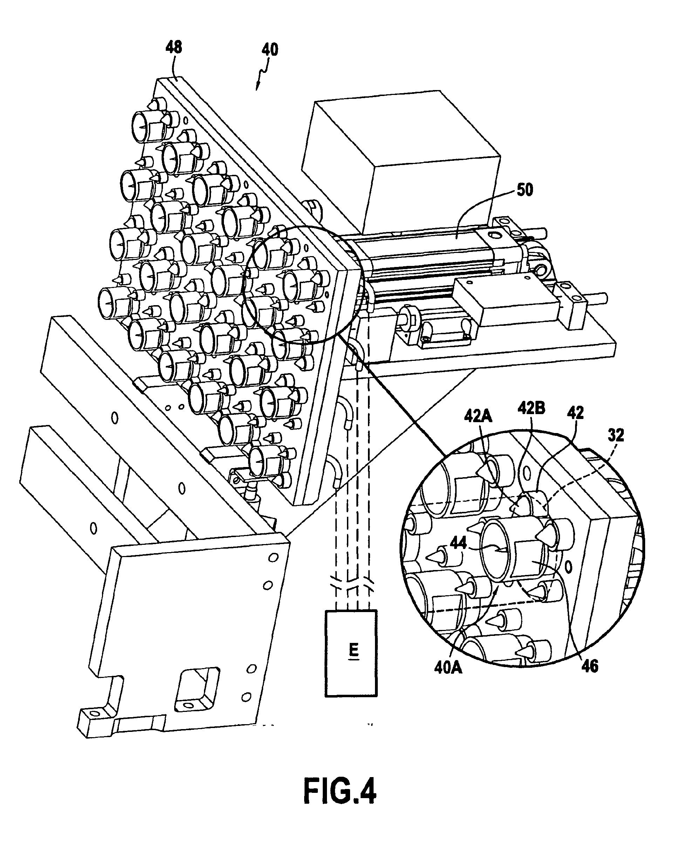

On décrit maintenant la figure 4, sur laquelle on a représenté le poste 40 d'ajustement des décors en position et de charge électrique de ces décors. On voit tout d'abord que ce poste 40 comprend autant d'ensembles de moyens d'ajustement en position et de charge électrique de décors que chaque bloc de moule comprend de chambres de thermoformage.

En référence à la partie agrandie de la figure 4, on décrit l'un de ces ensembles 40A, les ensembles étant tous identiques. On voit que l'ensemble 40A comprend des doigts d'ajustement 42 ayant chacun une tête de déflexion 42A qui forme une rampe qui, lorsqu'elle vient en contact du bord d'un décor, tend à repousser ce décor vers l'extérieur, c'est-à-dire vers la paroi d'une chambre de thermoformage dans laquelle le doigt en question est engagé. En l'espèce, les têtes de déflexion ont une forme conique. Les doigts d'ajustement 42 présentent également chacun un épaulement 42B qui forme une butée pour le bord du décor 32 représenté en trait interrompu sur la partie agrandie de la figure 4. Ainsi, lorsque les doigts pénètrent dans une chambre de thermoformage, ils écartent le décor vers la paroi de cette chambre et repoussent le décor vers le fond, jusqu'à une position correspondant à la profondeur de pénétration des doigts à l'intérieur de la chambre. Comme on le voit en particulier sur les figures 2A et 2B, les doigts pénètrent dans les chambres de thermoformage par leurs ouvertures de thermoformage 23. Pour repousser le décor vers le fond de la chambre en évitant un basculement de ce décor par rapport à son axe d'enroulement, les doigts 42 sont de préférence répartis régulièrement angulairement. En l'espèce, chaque ensemble 40A comporte quatre doigts disposés à chacun des quatre angles d'un carré inscrit dans le pourtour de la chambre.

Avantageusement, les doigts d'ajustement 42 sont formés dans un matériau électriquement isolant, par exemple une matière plastique.

Pour charger le décor en électricité statique, l'ensemble 40A comprend en outre une électrode 44 qui, comme les doigts, est apte à être engagée dans la chambre de thermoformage, de préférence par son ouverture de thermoformage 23. Les électrodes sont aptes à être alimentées en électricité par des moyens d'alimentation E représentés schématiquement sur la figure 4. On voit que l'électrode 44 de chaque ensemble 40A est disposée dans un corps creux 46. Comme les doigts, ce corps creux est de préférence réalisé dans un matériau électriquement isolant.

En l'espèce, on comprend que l'électrode 44 est alignée avec l'axe d'enroulement de la banderole 32, qui correspond à l'axe de la chambre de thermoformage destinée à être équipée de la banderole. Le corps creux 46 a globalement la forme d'un cylindre dont l'axe correspond à celui de l'électrode.

On voit également que les doigts 42 sont disposés autour du corps creux 46. L'électrode 44 et les doigts d'ajustement 42 sont solidaires vis-à-vis de leur déplacement d'engagement dans la chambre de thermoformage 22. En réalité, ainsi qu'on le voit sur la figure 4, tous les ensembles 40A sont solidaires d'une même plaque 48 qui peut être déplacée en va-et-vient par un vérin ou analogue 50 de manière à simultanément faire pénétrer tous les ensembles dans toutes les chambres de thermoformage devant être équipées de banderoles. Par exemple, les corps creux 46 sont rendus solidaires de la plaque 48 par vissage, et présentent à cet effet des méplats facilitant le vissage. De même, les électrodes 44 peuvent être rendues solidaires de la plaque 48 par vissage ou par tout autre moyen approprié.

De préférence, les moyens d'alimentation en électricité sont inactifs au début de la phase d'engagement des ensembles 40A dans les chambres de thermoformage. En effet, il est avantageux que les moyens de commande de chaque électrode en électricité soient aptes à commander cette alimentation électrique à la fin du déplacement d'engagement des doigts d'ajustement dans la chambre. Ceci permet de repousser la banderole vers le fond de la chambre sans que ce mouvement ne soit gêné par une éventuelle adhésion entre la banderole et les parois de la chambre, et de réaliser cette adhésion par l'électricité statique, seulement à la fin de ce mouvement d'ajustement. Bien entendu, les blocs de moule sont réalisés dans un matériau électriquement conducteur, en particulier du métal tel qu'un alliage d'aluminium, du bronze ou de l'acier inoxydable, et sont reliés à la masse. Il en résulte que, par la simple décharge électrique réalisée par l'électrode, la banderole présente dans une chambre se trouve naturellement chargée en électricité statique et vient alors se plaquer contre la paroi de cette chambre.

L'opération consistant à ajuster les banderoles en position et à les plaquer contre les parois des chambres par des charges électriques est donc réalisée en deux temps, ce qui rend particulièrement avantageux le fait de le faire en temps masqué par rapport à l'étape de thermoformage, laquelle est plus consommatrice de temps que l'étape de démoulage.

Concernant les doigts d'ajustement 42, on a indiqué qu'ils présentent une tête de déflexion 42A servant à repousser un décor en cours d'ajustement dans une chambre de thermoformage contre la paroi de cette chambre, et un épaulement servant à repousser le décor vers le fond de la chambre. Bien entendu, ces deux organes ayant des fonctions différentes, ils pourraient être prévus sur des éléments différents, ce qui n'est toutefois pas préférable.

Par ailleurs, le mode de réalisation préférentiel décrit utilise un bloc-support pivotant ayant quatre blocs de moule identiques. Comme on l'a indiqué, et comme on le voit en particulier sur les figures 2A et 2B, ceci permet de réaliser un thermoformage vertical, alors que les déplacements des organes d'introduction et d'ajustement, respectivement disposés de part et d'autre du bloc-support, sont opérés horizontalement. En variante, on pourrait utiliser un bloc-support ayant trois blocs de moule répartis à 120°, auquel cas le thermoformage pourrait s'opérer verticalement, tandis que les déplacements des organes d'introduction et d'ajustement seraient opérés selon des directions inclinées à 120°C par rapport à la verticale. Selon une autre variante, l'introduction des banderoles dans les chambres de thermoformage pourrait être réalisée alors que le bloc de moule est dans la même position que celle qui sert à l'ajustement, auquel cas on pourrait se contenter de n'avoir que deux blocs de moule montés sur un support pivotant. Si l'on renonce à travailler en temps masqué, on peut même n'avoir qu'un seul bloc de moule alternativement disposé dans les positions d'introduction, d'ajustement et de travail.

## Revendications

1. Procédé de fabrication de récipients par thermoformage et de mise en place de décors (32) sur ces récipients (R), dans lequel on fournit au moins un premier bloc de moule (30A, 30B, 30C, 30D) qui comporte au moins une chambre de thermoformage (22), on introduit un décor (32) dans ladite chambre de thermoformage, puis on thermoforme un récipient (R) dans cette chambre contenant le décor, à partir d'une ouverture de thermoformage (23) de cette chambre,
**caractérisé en ce que**, avant de thermoformer le récipient (R), on ajuste la position du décor (32) dans la chambre (22) et on charge le décor en électricité statique pour maintenir le décor plaqué contre la paroi de la chambre et **en ce que**, pour ajuster la position du décor (32) dans la chambre (22), on repousse le décor vers le fond de la chambre à partir de l'ouverture de thermoformage (23) de cette dernière.

2. Procédé selon la revendication 1, **caractérisé en ce qu'**on charge le décor (32) en électricité statique en alimentant en électricité une électrode (44) engagée dans la chambre (22) à la fin de l'ajustement de la position du décor.

3. Procédé selon la revendication 1 ou 2, **caractérisé en ce que**, avant de thermoformer le récipient (R), on place le premier bloc de moule (30C) dans une position d'ajustement, on ajuste la position du décor (32) et on charge le décor en électricité statique alors que le premier bloc de moule est dans cette position d'ajustement, et on amène le premier bloc de moule dans une position de travail (30D), et **en ce qu'**on thermoforme un récipient (R) dans la chambre (22) alors que le premier bloc de moule est dans cette position de travail.

4. Procédé selon la revendication 3, **caractérisé en ce qu'**on fournit un deuxième bloc de moule (30D) analogue au premier bloc de moule, et on fait en sorte que, lorsque l'un des blocs est dans la position de travail (30D), l'autre bloc soit dans la position d'ajustement (30C).

5. Procédé selon la revendication 3 ou 4, **caractérisé en ce que**, avant de placer le premier bloc de moule (30C) dans la position d'ajustement, on place ce bloc de moule dans une position d'introduction (30A) et on introduit un décor (32) dans la chambre de thermoformage (22) alors que le premier bloc de moule est dans sa position d'introduction.

6. Procédé selon les revendications 4 et 5, **caractérisé en ce qu'**on fournit un troisième bloc de moule (30A) analogue aux premier et deuxième blocs de moule et on fait en sorte que, lorsque l'un des blocs de moule est dans la position de travail (30D), un autre bloc soit dans la position d'ajustement (30C) et encore un autre bloc soit dans la position d'introduction (30A).

7. Procédé selon l'une quelconque des revendications 3 à 6, **caractérisé en ce qu'**on déplace le premier bloc de moule (30A, 30B, 30C, 30D) entre sa position de travail, sa position d'ajustement et, le cas échéant, sa position d'introduction, en faisant pivoter ledit bloc autour d'un axe de basculement (A).

8. Dispositif pour fabriquer des récipients (R) par thermoformage et mettre en place des décors (32) sur ces récipients, le dispositif comprenant au moins un premier bloc de moule (30A, 30B, 30C, 30D) qui comporte au moins une chambre de thermoformage (22) ayant une ouverture de thermoformage (23), des moyens (38) pour introduire un décor (32) dans la chambre de thermoformage (22) des moyens (42) pour, avant le thermoformage, ajuster la position du décor (32) dans la chambre de thermoformage (22) et des moyens (16 ; 22, 24) pour thermoformer un récipient (R) dans cette chambre, à partir de l'ouverture de thermoformage (23),
**caractérisé en ce qu'**il comprend des moyens (44) pour, avant le thermoformage, charger le décor en électricité statique pour maintenir le décor contre la paroi de la chambre et **en ce que** les moyens pour ajuster la position du décor (32) dans la chambre (22) comprennent des doigts d'ajustement (42) ayant chacun une tête de déflection (47A) et un épaulement (42B), et aptes à être engagés dans la chambre (22), vers le fond de cette dernière, par l'ouverture de thermoformage (23), pour repousser le décor vers le fond de la chambre à partir de l'ouverture de thermoformage.

9. Dispositif selon la revendication 8, **caractérisé en ce que** les doigts (42) sont formés dans un matériau électriquement isolant.

10. Dispositif selon la revendication 8 ou 9, **caractérisé en ce que** les moyens (40, 40A) pour charger le décor en électricité statique comprennent une électrode (44), apte à être engagée dans la chambre (22), de préférence par l'ouverture de thermoformage (23), et à être alimentée en électricité.

11. Dispositif selon la revendication 10, **caractérisé en ce qu'**il comporte des moyens de commande de l'alimentation (E) de l'électrode (44) en électricité, aptes à commander cette alimentation à la fin du déplacement d'engagement des doigts d'ajustement (42) dans la chambre (22).

12. Dispositif selon la revendication 10 ou 11, **caractérisé en ce que** l'électrode (44) et les doigts d'ajustement (42) sont solidaires vis-à-vis de leur déplacement d'engagement dans la chambre (22).

13. Dispositif selon l'une quelconque des revendications 10 à 12, **caractérisé en ce que** l'électrode (44) est disposée dans un corps creux (46) en matériau électriquement isolant.

14. Dispositif selon l'une quelconque des revendications 8 à 13, **caractérisé en ce qu'**il comporte des moyens pour déplacer le premier bloc de moule entre une position d'ajustement (30C), dans laquelle un décor peut être ajusté en position dans la chambre de thermoformage (22) et une position de travail (30D) dans laquelle un récipient peut être thermoformé dans ladite chambre.

15. Dispositif selon la revendication 14, **caractérisé en ce qu'**il comporte un deuxième bloc de moule analogue au premier bloc de moule et des moyens pour déplacer simultanément les blocs de moule entre leurs positions d'ajustement (30C) et de travail (30D) de telle sorte que, lorsque l'un des blocs est en position d'ajustement, l'autre bloc est en position de travail.

16. Dispositif selon la revendication 14 ou 15, **caractérisé en ce que** les moyens pour déplacer le premier bloc de moule sont aptes à placer en outre ledit premier bloc dans une position d'introduction (30A), dans laquelle un décor (36) peut être introduit dans la chambre de thermoformage (22).

17. Dispositif selon les revendications 15 et 16, **caractérisé en ce qu'**il comporte en outre un troisième bloc de moule analogue aux premier et deuxième blocs de moule et des moyens pour déplacer simultanément les blocs de moule entre leurs positions d'introduction (30A), d'ajustement (30C) et de travail (30D) de telle sorte que, lorsque l'un des blocs est en position d'introduction, un autre bloc est en position d'ajustement et encore un autre bloc est en position de travail.

18. Dispositif selon la revendication 15 et l'une quelconque des revendications 8 à 17, **caractérisé en ce que** les blocs de moule (30A, 30B, 30C, 30D) sont solidaires d'un bloc-support commun (30), apte à être basculé par pivotement autour d'un axe de basculement (A) pour faire passer les blocs entre la position de travail, d'ajustement et, éventuellement, d'introduction.

19. Dispositif selon les revendications 17 et 18, **caractérisé en ce qu'**il comporte en outre un quatrième bloc de moule analogue aux premier, deuxième et troisième blocs de moule, les quatre blocs de moule étant inclinés à angle droit deux à deux, **en ce que** lorsqu'un bloc de moule est en position de travail (30D), un autre en position d'introduction (30A) et un autre en position d'ajustement (30C), le dernier bloc de moule est dans une position d'attente (30B) et **en ce que**, pour faire passer les blocs de moule de l'une à l'autre de ces positions, le bloc-support (30) est pivoté de 90°, de telle sorte que, en position de travail ou d'attente d'un bloc de moule, sa chambre de thermoformage (20) est orientée verticalement, tandis que, dans les positions d'introduction ou d'ajustement d'un bloc de moule, sa chambre de thermoformage (20) est orientée horizontalement.

## Claims

1. A method of manufacturing containers by thermoforming and of putting decorations (32) in place on said containers (R), which method comprises providing at least a first mold block (30A, 30B, 30C, 30D) that includes at least one thermoforming chamber (22), inserting a decoration (32) into said thermoforming chamber, and then thermoforming a container (R) in said chamber containing the decoration, the thermoforming starting from a thermoforming opening (23) of said chamber;
said method being **characterized in that** it further comprises, before thermoforming the container (R), adjusting the position of the decoration (32) in the chamber (22), and charging the decoration with static electricity so as to hold the decoration pressed against the wall of the chamber, and **in that**, in order to adjust the position of the decoration (32) in the chamber (22), the method further comprises pushing the decoration towards the end wall of the chamber from its thermoforming opening (23).

2. A method according to claim 1, **characterized in that**, at the end of adjusting the position of the decoration, the decoration (32) is charged with static electricity by feeding electricity to an electrode (44) engaged in the chamber (22).

3. A method according to claim 1 or claim 2, **characterized in that**, before thermoforming the container (R), the first mold block (30C) is placed in an adjustment position, the position of the decoration (32) is adjusted, the decoration is charged with static electricity while the first mold block is in this adjustment position, and the first mold block is brought into a working position (30D), and **in that** a container (R) is thermoformed in the chamber (22) while the first mold block is in this working position.

4. A method according to claim 3, **characterized by** providing a second mold block (30D) that is analogous to the first mold block, and making provision so that, when one of the blocks is in the working position (30D), the other block is in the adjustment position (30C).

5. A method according to claim 3 or claim 4, **characterized in that**, before placing the first mold block (30C) in the adjustment position, said first mold block is placed in an insertion position (30A) and a decoration (32) is inserted into the thermoforming chamber (22) while the first mold block is in its insertion position.

6. A method according to claim 4 and claim 5, **characterized by** providing a third mold block (30A) analogous to the first and second mold blocks, and making provision so that, when one of the mold blocks is in the working position (30D), another block is in the adjustment position (30C) and yet another block is in the insertion position (30A).

7. A method according to any one of claims 3 to 6, **characterized in that** the first mold block (30A, 30B, 30C, 30D) is moved between its working position, its adjustment position, and, optionally, its insertion position, by causing said block to pivot about a pivot axis (A).

8. Apparatus for manufacturing containers (R) by thermoforming and for putting decorations (32) in place on said containers, the apparatus comprising at least one first mold block (30A, 30B, 30C, 30D) that includes at least one thermoforming chamber (22) having a thermoforming opening (23), means (38) for inserting a decoration (32) into the thermoforming chamber (22), means (42) for adjusting the position of the decoration (32) in the thermoforming chamber (22) before thermoforming, and means (16; 22, 24) for thermoforming a container (R) in said chamber, from the thermoforming opening (23);
said apparatus being **characterized in that** it further comprises means (44) for acting before the thermoforming to charge the decoration with static electricity so as to hold the decoration against the wall of the chamber, and **in that** the means for adjusting the position of the decoration (32) in the chamber (22) comprise adjustment fingers (42), each of which has a deflection head (47A) and a shoulder (42B), and which are suitable for being engaged into the chamber (22), towards the end-wall thereof, via the thermoforming opening (23) so as to push the decoration back towards the end-wall of the chamber from the thermoforming opening.

9. Apparatus according to claim 8, **characterized in that** the fingers (42) are made of an electrically insulating material.

10. Apparatus according to claim 8 or claim 9, **characterized in that** the means (40, 40A) for charging the decoration with static electricity comprise an electrode (44) suitable for being engaged in the chamber (22), preferably via the thermoforming opening (23), and for being electrically powered.

11. Apparatus according to claim 10, **characterized in that** it further comprises control means for controlling the feeding of electricity (E) to the electrode (44), which control means are suitable for causing electricity to be fed at the end of the movement whereby the adjustment fingers (42) are engaged into the chamber (22).

12. Apparatus according to claim 10 or claim 11, **characterized in that** the electrode (44) and the adjustment fingers (42) are constrained to move together while they are being engaged into the chamber (22).

13. Apparatus according to any one of claims 10 to 12, **characterized in that** the electrode (44) is disposed in a hollow body (46) made of an electrically insulating material.

14. Apparatus according to any one of claims 8 to 13, **characterized in that** it further comprises means for moving the first mold block between an adjustment position (30C), in which the position of a decoration in the thermoforming chamber (22) can be adjusted, and a working position (30D), in which a container can be thermoformed in said chamber.

15. Apparatus according to claim 14, **characterized in that** it further comprises a second mold block analogous to the first mold block, and means for simultaneously moving the mold blocks between their adjustment positions (30C) and their working positions (30D) in such a manner that, when one of the blocks is in the adjustment position, the other block is in the working position.

16. Apparatus according to claim 14 or claim 15, **characterized in that** the means for moving the first mold block are suitable, in addition, for placing said first block in an insertion position (30A), in which a decoration (36) can be inserted into the thermoforming chamber (22).

17. Apparatus according to claim 15 and claim 16, **characterized in that** it further comprises a third mold block analogous to the first and second mold blocks, and means for simultaneously moving the mold blocks between their insertion positions (30A), their adjustment positions (30C), and their working positions (30D) in such a manner that, when one of the blocks is in the insertion position, another block is in the adjustment position, and yet another block is in the working position.

18. Apparatus according to claim 15 and to any one of claims 8 to 17, **characterized in that** the mold blocks (30A, 30B, 30C, 30D) are secured to or integral with a common support block (30) suitable for being pivoted about a pivot axis (A) so as to cause the blocks to go between the working and adjustment positions, and optionally the insertion position.

19. Apparatus according to claim 17 and claim 18, **characterized in that** it further comprises a fourth mold block analogous to the first, second, and third mold blocks, the four mold blocks being inclined at right angles in pairs, **in that**, when one mold block is in the working position (30D) another block is in the insertion position (30A) and another block is in the adjustment position (30C), the last mold block is in a waiting position (30B), and **in that**, in order to cause the mold blocks to go from one to another of these positions, the support block (30) is pivoted through 90°, in such a manner that, when a mold block is in the working position or the waiting position, its thermoforming chamber (20) extends vertically, while, when a mold block is in the insertion position or in the adjustment position, its thermoforming chamber (20) extends horizontally.

## Patentansprüche

1. Verfahren zur Herstellung von Behältern durch Warmformen und Anbringen von Verzierungen (32) auf den Behältern (R), bei dem mindestens ein erster Formblock (30A, 30B, 30C, 30D) bereitgestellt wird, der mindestens eine Warmformungskammer (22) umfaßt, eine Verzierung (32) in die Warmformungskammer eingeführt wird und dann ein Behälter (R) in dieser Kammer, die die Verzierung enthält, von einer Warmformungsöffnung (23) dieser Kammer aus warmgeformt wird,
**dadurch gekennzeichnet, daß** vor der Warmformung des Behälters (R) die Position der Verzierung (32) in der Kammer (22) angepaßt und die Verzierung mit statischer Elektrizität aufgeladen wird, um die Verzierung an die Wand der Kammer gedrückt zu halten, und daß für die Anpassung der Position der Verzierung (32) in der Kammer (22) die Verzierung zum Boden der Kammer von der Warmformungsöffnung (23) dieser letztgenannten aus zurückgeschoben wird.

2. Verfahren nach Anspruch 1, **dadurch gekennzeichnet, daß** die Verzierung (32) mit statischer Elektrizität aufgeladen wird, wobei eine Elektrode (44), die in der Kammer (22) eingesetzt ist, nach dem Anpassen der Position der Verzierung mit Elektrizität versorgt wird.

3. Verfahren nach Anspruch 1 oder 2, **dadurch gekennzeichnet, daß** vor der Warmformung des Behälters (R) der erste Formblock (30C) in eine Anpassungsposition gebracht wird, die Position der Verzierung (32) angepaßt und die Verzierung mit statischer Elektrizität aufgeladen wird, während der erste Formblock in dieser Anpassungsposition ist, und daß der erste Formblock in eine Arbeitsposition (30D) gebracht wird und ein Behälter (R) in der Kammer (22) warmgeformt wird, während sich der erste Formblock in dieser Arbeitsposition befindet.

4. Verfahren nach Anspruch 3, **dadurch gekennzeichnet, daß** ein zweiter Formblock (30D) analog zum ersten Formblock bereitgestellt wird und daß vorgesehen wird, daß, wenn sich einer der Blöcke in der Arbeitsposition (30D) befindet, der andere Block in der Anpassungsposition (30C) ist.

5. Verfahren nach Anspruch 3 oder 4, **dadurch gekennzeichnet, daß** vor dem Anbringen des ersten Formblocks (30C) in der Anpassungsposition dieser Formblock in eine Einführungsposition (30A) gebracht wird und eine Verzierung (32) in die Warmformungskammer (22) eingeführt wird, während sich der erste Formblock in seiner Einführungsposition befindet.

6. Verfahren nach den Ansprüchen 4 und 5, **dadurch gekennzeichnet, daß** ein dritter Formblock (30A) analog zum ersten und zum zweiten Formblock bereitgestellt wird, und daß vorgesehen wird, daß, wenn sich einer der Formblöcke in der Arbeitsposition (30D) befindet, ein anderer Block in der Anpassungsposition (30C) oder auch ein anderer Block in der Einführungsposition (30A) ist.

7. Verfahren nach einem der Ansprüche 3 bis 6, **dadurch gekennzeichnet, daß** der erste Formblock (30A, 30B, 30C, 30D) zwischen seiner Arbeitsposition, seiner Anpassungsposition und gegebenenfalls seiner Einführungsposition verschoben wird, wobei der Block um eine Schwenkachse (A) schwenkt.

8. Vorrichtung zur Herstellung von Behältern (R) durch Warmformen und zum Anbringen von Verzierungen (32) auf diesen Behältern, wobei die Vorrichtung mindestens einen ersten Formblock (30A, 30B, 30C, 30D), umfassend mindestens eine Warmformungskammer (22) mit einer Warmformungsöffnung (23), Mittel (38) zum Einführen einer Verzierung (32) in die Warmformungskammer (22), Mittel (42), um vor dem Warmformen die Position der Verzierung (32) in der Warmformungskammer (22) anzupassen und Mittel (16; 22, 24), um einen Behälter (R) in dieser Kammer von der Warmformungsöffnung (23) aus warmzuformen, umfaßt,
**dadurch gekennzeichnet, daß** sie Mittel (44) umfaßt, um vor dem Warmformen die Verzierung mit statischer Elektrizität aufzuladen, um die Verzierung an der Wand der Kammer zu halten, und daß die Mittel zum Anpassen der Position der Verzierung (32) in der Kammer (22) Anpassungsfinger (42) umfassen, die jeweils einen Ablenkkopf (47A) und einen Absatz (42B) aufweisen und geeignet sind, in die Kammer (22) zum Boden dieser letztgenannten hin durch die Warmformungsöffnung (23) eingesetzt zu werden, um die Verzierung von der Warmformungsöffnung aus zum Boden der Kammer zurückzuschieben.

9. Vorrichtung nach Anspruch 8, **dadurch gekennzeichnet, daß** die Finger (42) aus einem elektrisch isolierenden Material gebildet sind.

10. Vorrichtung nach Anspruch 8 oder 9, **dadurch gekennzeichnet, daß** die Mittel (40, 40A) zum Aufladen der Verzierung mit statischer Elektrizität eine Elektrode (44) umfassen, die geeignet ist, in die Kammer (22) vorzugsweise durch die Warmformungsöffnung (23) eingesetzt und mit Elektrizität versorgt zu werden.

11. Vorrichtung nach Anspruch 10, **dadurch gekennzeichnet, daß** sie Mittel zur Steuerung der Versorgung (E) der Elektrode (44) mit Elektrizität umfaßt, die geeignet sind, diese Versorgung nach der Verschiebung zum Einsetzen der Anpassungsfinger (42) in die Kammer (22) zu steuern.

12. Vorrichtung nach Anspruch 10 oder 11, **dadurch gekennzeichnet, daß** die Elektrode (44) und die Anpassungsfinger (42) im Hinblick auf ihre Verschiebung zum Einsetzen in die Kammer (22) verbunden sind.

13. Vorrichtung nach einem der Ansprüche 10 bis 12, **dadurch gekennzeichnet, daß** die Elektrode (44) in einem Hohlkörper (46) aus einem elektrisch isolierenden Material angeordnet ist.

14. Vorrichtung nach einem der Ansprüche 8 bis 13, **dadurch gekennzeichnet, daß** sie Mittel umfaßt, um den ersten Formblock zwischen einer Anpassungsposition (30C), in der eine Verzierung in Position in der Warmformungskammer (22) angepaßt werden kann, und einer Arbeitsposition (30D), in der ein Behälter in der Kammer warmgeformt werden kann, zu verschieben.

15. Vorrichtung nach Anspruch 14, **dadurch gekennzeichnet, daß** sie einen zweiten Formblock analog zum ersten Formblock und Mittel umfaßt, um gleichzeitig die Formblöcke zwischen ihrer Anpassungsposition (30C) und ihrer Arbeitsposition (30D) zu verschieben, so daß, wenn sich einer der Blöcke in Anpassungsposition befindet, der andere Block in Arbeitsposition ist.

16. Vorrichtung nach Anspruch 14 oder 15, **dadurch gekennzeichnet, daß** die Mittel zum Verschieben des ersten Formblocks geeignet sind, ferner den ersten Block in einer Einführungsposition (30A) anzuordnen, in der eine Verzierung (36) in die Warmformungskammer (22) eingeführt werden kann.

17. Vorrichtung nach den Ansprüchen 15 und 16, **dadurch gekennzeichnet, daß** sie ferner einen dritten Formblock analog zum ersten und zweiten Formblock und Mittel umfaßt, um gleichzeitig die Formblöcke zwischen ihrer Einführungs- (30A), Anpassungs- (30C) und Arbeitsposition (30D) zu verschieben, so daß, wenn sich einer der Blöcke in Einführungsposition befindet, ein anderer Block in Anpassungsposition und noch ein anderer Block in Arbeitsposition befindet.

18. Vorrichtung nach den Ansprüchen 15 und einem der Ansprüche 8 bis 17, **dadurch gekennzeichnet, daß** die Formblöcke (30A, 30B, 30C, 30D) mit einem gemeinsamen Blockträger (30) verbunden sind, der durch Schwenken um eine Schwenkachse (A) geschwenkt werden kann, um die Blöcke zwischen der Arbeits-, Anpassungs- und eventuell Einführungsposition zu verschieben.

19. Vorrichtung nach den Ansprüchen 17 und 18, **dadurch gekennzeichnet, daß** sie ferner einen vierten Formblock analog zu dem ersten, zweiten und dritten Formblock umfaßt, wobei die vier Formblöcke in einem rechten Winkel zwei und zwei geneigt sind, daß, wenn sich ein Formblock in Arbeitsposition (30D) befindet, ein anderer in Einführungsposition (30A) ist, und ein weiterer in Anpassungsposition (30C) ist, wobei der letzte Formblock in einer Warteposition (30B) ist, und daß, um die Formblöcke von der einen in die andere der Positionen zu verschieben, der Blockträger (30) um 90° geschwenkt wird, so daß in Arbeits- oder Warteposition eines Formblocks seine Warmformungskammer (20) vertikal ausgerichtet ist, während in den Einführungs-oder Anpassungspositionen eines Formblocks seine Warmformungskammer (20) horizontal ausgerichtet ist.
